# EUROPÄISCHE PATENTSCHRIFT

(11) **EP 2 078 938 B1**
(45) Veröffentlichungstag und Bekanntmachung des Hinweises auf die Patenterteilung: **18.03.2015**
(21) Anmeldenummer: 09000345.0
(22) Anmeldetag: 13.01.2009
(51) Int. Cl.: G01G 15/00, G01G 19/00

(54) **Wägesystem**
Weighing system
Système de pesage

(30) Priorität: 14.01.2008 DE 202008000567 U
(43) Veröffentlichungstag der Anmeldung: 15.07.2009
(73) Patentinhaber: WIPOTEC Wiege-und Positioniersysteme GmbH, 67657 Kaiserslautern (DE)
(72) Erfinder: Edrich, Andreas, 66424 Homburg (DE); Mildenberger, Stefan, 67663 Kaiserslautern (DE)
(74) Vertreter: Mischung, Ralf

(56) Entgegenhaltungen:
- EP-A- 0 736 455
- EP-A1- 2 065 687
- US-A- 5 014 797
- US-A1- 2003 205 414

## Beschreibung

Die vorliegende Erfindung betrifft ein Wägesystem zur Wägung sequenziell zugeführter Wiegegüter, insbesondere Behälter.

Derartige Systeme sind aus dem Stand der Technik grundsätzlich bekannt und kommen insbesondere bei Abfüllanlagen zum Einsatz. Dort werden Behälter wie beispielsweise Flaschen oder Dosen in schneller Folge befüllt und nacheinander einer Kontrollwaage zugeführt, um die Füllmenge zu ermitteln

Die EP 2 065 687 A1 beschreibt eine Vorrichtung für den Transport und das Wiegen von bewegten Briefen. Dabei sind Förderelemente als Vorlast vorgesehen, zwischen denen der Brief eingezogen und dabei befördert wird, wobei geeignete Führungselemente dafür sorgen, dass ein Flattern oder Umbiegen des Briefes während des Transports vermieden wird. Für statische Wiegeaufgaben ist diese Vorrichtung nicht vorgesehen, da mit hohen Durchsätzen ohne Stillstand gewogen werden soll.
Aus der EP 0736 455 A ist ebenfalls eine Füllvorrichtung bekannt. Dort werden Behälter befüllt und mittels eines Drehstems einer Waage zugeführt, um anschließend weitergefördert zu werden. Der Drehstern weist einzelne Taschen auf, die zur Aufnahme der einzelnen Behälter ausgebildet sind, so dass die Behälter durch Kontakt mit den Taschenwandungen gefördert und auf einer Kreisbahn bewegt werden können.

Die US 2003/0205414 A1 beschreibt eine vibrierende Waagschale, mit der loses Schüttgut in Briefen ermittelt werden soll. Dazu werden die Briefe sowohl punktuell als auch ganzflächig geklemmt gewogen. Dabei ermittelte unterschiedliche Resonanzfrequenzen lassen Rückschlüsse auf enthaltenes Pulver in den Briefen zu.

Die US 5,014,797 erläutert eine modulare Maschine zum Bearbeiten von Briefen, bestehend aus mehreren miteinander funktionell in Zusammenhang stehenden Modulen. Die Maschine umfasst insbesondere Transportmittel zum Bewegen von Umschlägen mittels Reibschluss und ein Messmodul zur Erfassung briefspezifischer Daten.

Als Nachteil stellt sich dabei heraus, dass zur Ermittlung des Füllgewichts ein Kraftschluss mit dem Drehstern während des Wiegens ausgeschlossen werden muss, der Behälter also auf der Wiegeplattform freigestellt sein muss. Zu diesem Zweck wird der Drehstern in der vorgenannten Schrift jeweils um ein Maß zurückgedreht, so dass der Behälter berührungsfrei auf der Wiegeplattform aufsteht, um gewogen zu werden. Nach Abschluss des Wiegevorgangs dreht der Drehstern wieder in Förderrichtung vorwärts und befördert den nächsten zu wiegenden Behälter auf die Waage.

Wenngleich ein Kraftnebenschluss durch das Rückdrehen des Drehstems vermieden werden kann, so genügt diese Vorgehensweise nicht für die immer höheren Transportgeschwindigkeiten der modernen Abfüllanlagen. Dort führt die Masse bzw. Trägheit der befüllten Behälter dazu, dass diese um ein bestimmtes Maß in tangentialer Richtung weiter rutschen, nachdem der Drehstern einen Fördertakt abgeschlossen hat, so dass deren endgültige Ruhelage nicht genau vorhersehbar ist. Folglich kann es passieren, dass bei dem planmäßigen leichten Zurückdrehen des Drehstems die vorausgehende Taschenwandung wieder in Kontakt mit dem gegen diese Wandung gerutschten Behälter tritt, so dass ein Kraftnebenschluss entsteht und die Gewichtskraft nicht exakt ermittelt werden kann.

Aufgabe der Erfindung ist es daher, ein Wägesystem insbesondere für schnell fördernde Kontrollwagen in Befüllanlagen anzubieten, bei dem getaktet bewegte Wiegegüter trotz hoher Fördergeschwindigkeiten exakt und mit geringer Standardabweichung gewogen werden können.

Die Aufgabe wird gelöst durch ein Wägesystem nach Anspruch 1.

Die Erfindung geht von der Erkenntnis aus, dass die Gewichtskraft eines zu wiegenden Wiegeguts innerhalb einer schnell fördernden Füllanlage dann besonders sicher und genau erfasst werden kann, wenn das entlang seiner vorgegebenen (kreisförmigen, linearen oder anders gearteten) Förderbahn transportierte Wiegegut vor und/oder während des Wiegevorgangs in einer vorgegebenen Position vorübergehend fixiert wird. Auf diese Weise wird insbesondere ein unkontrolliertes Weiterrutschen der zu wiegenden Behälter vermieden, so dass das sichere Freistellen bei definiertem Zurückdrehen des Drehsterns erfolgen kann und evtl. Ecklastfehler des Wägesystems vernachlässigbar werden.

Obwohl die Erfindung bevorzugt für Drehsterne zur Anwendung kommt, ist sie gleichermaßen für anders geförderte Güter geeignet, welche bspw. entlang einer geradlinigen oder unregelmäßig gekrümmten Bahn dem Wägetisch zu- bzw. von diesem weggefördert werden. Entsprechend sind die nachfolgenden Bezugnahmen auf eine Kreisbahn der Güter mit tangentialer bzw. radialer Komponente nur als ausgewähltes, nicht einschränkendes Beispiel zu verstehen.)

Die Erfindung sieht dabei einen Wägetisch vor, der zur Aufnahme der Gewichtskraft des Wiegeguts vorgesehen ist und zugleich als Vorlast auf einer Wägezelle aufliegt. Das zu wiegende Wiegegut ist dem Wägetisch erfindungsgemäß entlang einer über den Wägetisch verlaufenden Bahn B zuführbar bzw. vom Wägetisch abführbar, was typischerweise, aber nicht notwendig, in einzelnen, getakteten Schritten erfolgt. Oberhalb des Wägetisches ist eine Klemmvorrichtung vorgesehen, mit der ein dem Wägetisch zugeführtes und darauf aufliegendes Wägegut lösbar gegen einen Anschlag klemmbar ist.

Dadurch ergibt sich der erfindungsgemäße Vorteil, dass das zu wiegende Wiegegut in einer definierten Position gehalten wird, um es dabei - typischerweise im "Stillstand" des Wägeguts - zu wiegen. Diese Wägung erfolgt also vorzugsweise vollständig innerhalb der Zeitspanne, in der das Wägegut geklemmt ist, sie kann jedoch auch schon vor der Klemmung begonnen und/oder erst danach beendet werden.

Die Erfindung gestattet vorteilhaft die Wägung mit deutlich geringerer Standardabweichung als in vergleichbaren Fällen aus dem Stand der Technik bekannt.

Da die Lage des Wiegeguts relativ zum Wägetisch genau definiert ist, kann das das Wägegut transportierende Antriebsmittel (insbesondere ein Drehstern) nach jedem Fördertakt so bewegt bzw. gedreht werden, dass keine Berührung mit dem Wiegegut erfolgt und dieses ohne Kraftnebenschluss auf dem Wägetisch ruht. Insbesondere wird also ein unkontrolliertes Weiterrutschen des Wiegeguts nach Abschluss eines Fördertakts vermieden.

Erfindungsgemäß ist der Anschlag Teil der Klemmvorrichtung, die ihrerseits eine vorlast für die Wägezelle bildet. Nach einer vorteilhaften Ausführungsform der Erfindung ist der Anschlag mit dem Wägetisch einstückig ausgebildet. Zugleich kann die Anschlagfläche mit einer geeigneten Beschichtung und/oder einem geeigneten Aufnahmeprofil ausgestattet sein, um das Wiegegut über Haftreibung oder Formschluss in seiner Position zu fixieren.

Die erfindungsgemäße Klemmvorrichtung umfasst wenigstens ein Klemmelement, mit welchem das Wiegegut mit einer quer zur Bahn gerichteten Klemmkraftkomponente beaufschlagbar ist, um es gegen den Anschlag zu klemmen. Während das Wiegegut also in einer ersten Richtung entlang der Bahn B, getaktet über den Wägetisch gefördert wird, erfährt es während eines Taktes eine Klemmbeaufschlagung quer zu dieser Richtung. Bei zurückgezogener bzw. nicht klemmender Lage des Klemmelements liegen erfindungsgemäß keine Komponenten der Klemmvorrichtung innerhalb der Bahn B, so dass in diesem Fall die Behälter ohne Hindernis weitergefördert werden können. Vorteilhafterweise erstrecken sich also alle zur Klemmung benötigten Komponenten seitlich bzw. beidseitig der Förderbahn B.

Nach einer vorteilhaften Ausführungsform der Erfindung ist das Klemmelement nach Art eines Kolbens ausgebildet und über ein Betätigungselement bewegbar. Der Kolben soll dabei insbesondere quer zur Förderbahn B vor- und zurückbewegbar sein. Er kann dabei bevorzugt in einem nach oben kragenden Wandabschnitt des Wägetisches oder in der Ebene des Wägetisches gelagert sein bzw. von diesem Abschnitt geführt werden. "Kolbenartig" soll dabei zum Ausdruck bringen, dass eine nicht näher definierte Bewegung des Betätigungselements in eine translatorische bzw. lineare Bewegung umgesetzt wird, um die Klemmwirkung zu erzielen. (Grundsätzlich kann aber auch eine Schwenkbewegung eines Klemmelements um einen Drehwinkel zu einer Klemmung führen.)

Insbesondere kann das Klemmelement über das erste Ende eines als Pleuel-, Hebel-, Knieelement oder sonstigen geeigneten Betätigungselements bewegbar sein, während ein zweites Ende des Betätigungselements exzentrisch auf einer Antriebswelle angeordnet ist. Bei Rotation der Antriebswelle wird das eine Ende des Betätigungselements exzentrisch um die Wellenachse herumbewegt, wodurch das andere Ende des Betätigungselements - bei geeigneter linearer Führung - eine entsprechende lineare Kolbenbewegung ausführt. Der besondere Vorteil dieser exzentrischen Lagerung des Betätigungselements liegt darin, dass eine etwaige Unwucht leicht durch geeignete Ausgleichsgewichte im Bereich der Welle bzw. des Exzenters ausgeglichen werden kann. Insbesondere kann die lineare Bewegung des kolbenartigen Klemmelements durch ein am Exzenter angeordnetes Gegengewicht so ausgeglichen werden, dass keinerlei störende oder das Messergebnis verfälschende resultierende Kräfte auftreten. Darüber hinaus lässt sich mit dem exzentrisch gelagerten einen Ende des Betätigungselements auch auf engem Raum ein ausreichender Verstellweg des Klemmelements realisieren, wobei dieser vollständige Hub bei einer halben Umdrehung der Antriebswelle zurückgelegt wird.

Eine besonders vorteilhafte Ausführungsform des erfindungsgemäßen Wägesystems sieht weiterhin vor, dass das Betätigungselement nach Art eines periodisch beaufschlagten Kolbens weitgehend unterbrechungsfrei vor- und zurückbewegt wird, bspw. über einen mit konstanter Drehzahl betriebenen Exzenter. Entsprechend erfolgen die Wägevorgänge in regelmäßigen bzw. vorbestimmten Abständen, die an die Drehzahl des Exzenters gekoppelt sind und zwar immer dann, wenn das Klemmelement ein Wägegut fixiert. Je nach Fördergeschwindigkeit bzw. "Andrang" der Wägegüter vor dem Wägetisch können einzelne Hübe des Klemmelements dabei auch "ins Leere" laufen, wenn aktuell kein Wiegegut geklemmt wird. Die Wägung kann dann entfallen, ohne das die homogene Bewegung des Klemmelements gestoppt bzw. neu gestartet werden müsste, um während dieses Leertaktes bspw. das Nullstellen des Systems vorzunehmen.

Im Rahmen von Versuchen hat sich darüber hinaus herausgestellt, dass die Beaufschlagung des Wiegeguts mit dem Klemmelement unter Umständen besonders vorsichtig bzw. sanft erfolgen sollte. Zu diesem Zweck sieht eine weitere Ausführungsform der Erfindung vor, dass das Klemmelement über wenigstens ein Federelement mit dem Betätigungselement verbunden ist. Durch Vermeidung einer starren Verbindung zwischen Klemmelement und Betätigungselement kann sich das Klemmelement in engen Toleranzen unabhängig von der Lage des Betätigungselements ausrichten. Zugleich kann die Feder die schlagartige Beaufschlagung des Wiegeguts mit einer Klemmkraft etwas dämpfen, so dass das Wiegegut eher sanft in seine Klemmposition gefördert wird und abrupte Bewegungen seines Inhalts gemindert oder vermieden werden.

Zur Erkennung der Lage des Klemmelements bzw. des das Klemmelement bedienenden Betätigungselements ist gemäß einer weiteren vorteilhaften Ausführungsform der Erfindung ein Näherungssensor vorgesehen, mit dem die unmittelbare oder mittelbare Erfassung der Lage des Betätigungselements möglich wird. Dies kann beispielsweise mittels einer auf der Antriebswelle angeordneten Kurvenscheibe realisiert werden, deren Drehlage von einem Näherungssensor erfasst wird. Auch ein Encoder eines das Klemmelement antreibenden Motors oder ein anderer, dem Fachmann bekannter Sensor kann hier eingesetzt werden. Ein unmittelbarer Rückschluss auf die damit zusammenhängende Lage des Betätigungs- oder Klemmelements ist dann einfach möglich, so dass leicht zu erkennen ist, ob das Wiegegut aktuell geklemmt oder freigegeben ist. Die Kurvenscheibe bzw. ein geeignet ausgebildeter Exzenter kann neben der Lageerkennung gleichzeitig auch als Ausgleichsschwungmasse dienen und spart in dieser Doppelfunktion vorteilhaft Bauraum ein.

Wie vorstehend ausgeführt, ist das erfindungsgemäße Wägesystem insbesondere für Befüllanlagen geeignet. Zur Zuführung des Wiegeguts auf den Wägetisch kann erfindungsgemäß ein mit einzelnen Taschen versehener, in Taktschritten um vorgebbare Drehwinkel drehbarer Drehstern vorgesehen sein. Diese Taschen sind jeweils zur Aufnahme eines oder auch mehrerer Wägegüter ausgebildet, die sich über den Wägetisch hinweg drehen und so das Wiegegut entlang der vorbeschriebenen Bahn B fördern.

Dabei kann es sinnvoll sein, dass der Drehstern nach Zuführung des Wiegeguts auf den Wägetisch um einen vorgebbaren Drehwinkel zurückgedreht wird, um das Wiegegut auf dem Wägetisch freizustellen, also jeglichen Kraftnebenschluss zu vermeiden.

Analog kann auch ein Förderband oder sonstiges - nicht kreisförmig transportierendes Transportmittel vorgesehen sein, welches durch geeignete Ansteuerung analog zum vorbeschriebenen Beispiel das Wiegegut stoppt und/oder freistellt.

Um eine störende Beeinflussung der Wägezelle durch das Klemmelement bzw. den Drehstems (oder das Förderband) zu vermeiden, ist die Bewegungsrichtung des Drehstems (oder des Förderbands) im Bereich der vorgesehenen Klemmung vorzugsweise jeweils senkrecht zur Lasteinleitungsrichtung der Wägezelle gewählt. Massenkräfte des Klemmelements und Fördermittels können dann die Wägezelle nicht beeinflussen. Besonders vorteilhaft ist das Wägesystem so ausgebildet, dass alle drei Bewegungsrichtungen (des Klemmelements, der Bahn der Wägegüter am Klemmort und die Lasteinleitungsrichtung der Wägezelle) jeweils senkrecht zueinander verlaufen, um jeweils gegenseitige Einflussnahme zu reduzieren/vermeiden.

Weitere vorteilhafte Ausführungsformen ergeben sich aus den Unteransprüchen.

Nachfolgend soll eine beispielhafte Ausführungsform der Erfindung anhand von Figuren näher erläutert werden. Dabei zeigen
- Fig. 1: eine schematische perspektivische Ansicht eines erfindungsgemäßen Wägesystems,
- Fig. 2: eine Detailansicht des Systems nach Fig. 1 und
- Fig. 3: eine Antriebswelle des erfindungsgemäßen Systems mit Exzenter und Gegengewicht.

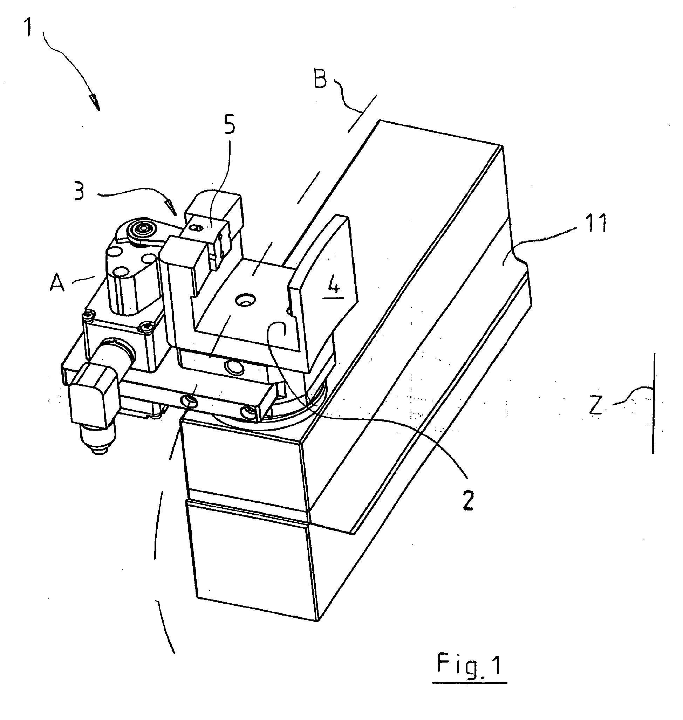

Fig. 1 zeigt ein Wägesystem 1. Dieses umfasst eine Wägezelle 11 mit einem nicht näher dargestellten Lastaufnehmer, über den eine zu ermittelnde Gewichtskraft in die Wägezelle eingeleitet und dort verarbeitet wird. Auf dem Lastaufnehmer ruht ein Wägetisch 2, der in Seitenansicht im Wesentlichen U-förmige Gestalt hat. Eine Transportbahn B für zu wiegende und nicht näher dargestellte Behälter verläuft über den Wägetisch 2, wobei die Behälter zumindest mit einem unteren Abschnitt zwischen den beiden Schenkeln des U-förmigen Wägetischs 2 hindurchgefördert werden. Typischerweise ist die Förderbahn B kreisförmig ausgebildet und entspricht damit der Bahn eines Drehstems um eine schematisch angedeutete vertikale Achse Z.

Eine am Wägesystem 1 ausgebildete Klemmvorrichtung 3 dient zur temporären Fixierung des Wiegeguts auf dem Wägetisch 2, wobei das Wiegegut zwischen einem Klemmelement 5 und einem Anschlag 4 geklemmt wird. Der Anschlag 4 wird hier durch einen Schenkel des U-förmigen Wägetischs dargestellt, während das Klemmelement 5 in dem anderen Schenkel des Wägetischs über Führungsmittel 12 geführt wird, so dass es vorzugsweise radial bzw. senkrecht zur Bahn B vor- und zurückbewegbar ist, wobei der Hub durch eine Wegbegrenzung 13 begrenzt sein kann. Das Klemmelement 5 wird über einen Exzenter mittels eines elektrischen Antriebs A angetrieben, wobei Klemmvorrichtung 3, Wägetisch 2 und Antrieb A gemeinsam als Vorlast auf dem Lastaufnehmer der Wägezelle 11 aufliegen.

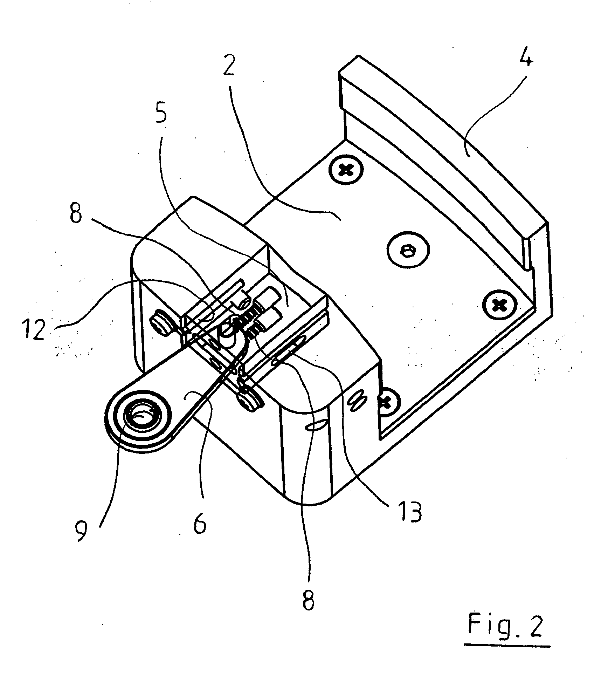

Fig. 2 zeigt den freigeschnitten Wägetisch 2 mit detaillierter Darstellung des Klemmelements 5. Deutlich zu sehen ist, dass das Klemmelement 5 über ein Betätigungselement 6 und dazwischen angeordnete Federn 8 beaufschlagbar ist, um in radialer bzw. zur Bahn B senkrechter Richtung auf den gegenüber liegenden Anschlag 4 zu- bzw. von diesem fortbewegt zu werden. Das freie Ende des Betätigungselements 6 weist nach Art eines Pleuels eine Bohrung 9 auf, um damit auf einen Exzenterzapfen 9' aufgesetzt zu werden.

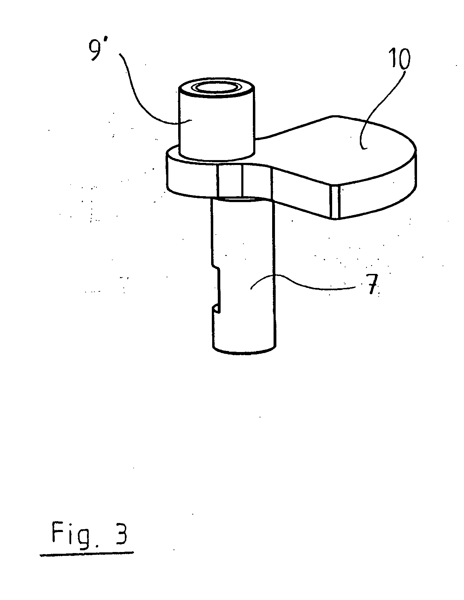

Fig. 3 zeigt den Exzenterzapfen 9', der exzentrisch zu einer Antriebswelle 7 ausgebildet ist. Zum Ausgleich einer Unwucht ist an der Antriebswelle 7 ein Ausgleichsgewicht 10 angeordnet, durch welches die Massenkräfte bei einer Klemmbewegung ausgeglichen werden sollen.

Die Funktionsweise des erfindungsgemäßen Wägesystems lässt sich anschaulich gemäß Fig. 1 erläutern. Ein nicht näher dargestellter Drehstern rotiert um die Achse Z und fördert dabei einen zu wiegenden Behälter entlang der Förderbahn B auf den Wägetisch 2. Der Antrieb A treibt die Antriebswelle 7 mit dem darauf sitzenden Exzenterzapfen 9' so an, dass das damit verbundene Betätigungselement 6 gegen die Feder 8 und diese gegen das Klemmelement 5 drücken, so dass diese in radialer Richtung (bzw. senkrecht zur Bahn B) auf den Anschlag 4 zubewegt wird, um den dazwischen liegenden Behälter kurzfristig zu klemmen. Sofern erforderlich kann der Drehstern dabei so gedreht werden, dass er den zu wiegenden Behälter nicht berührt ("freistellt") , um einen Kraftnebenschluss zu vermeiden. Während der Behälter zwischen dem Klemmelement 5 und dem Anschlag 4 geklemmt wird oder auch nachdem diese Klemmung gelöst wurde, kann das Gewicht des Behälters über den Lastaufnehmer der Wägezelle 11 erfasst und verarbeitet werden. Im Anschluss daran wird der Drehstern um einen geeigneten Drehwinkel in Förderrichtung weiterbewegt, so dass der nächste zu wiegende Behälter auf dem Wägetisch zu stehen kommt.

Es ist denkbar, dass der Drehstern mehrere, in radialer Richtung benachbarte Behälter gleichzeitig fördert, deren Gewicht jeweils von separaten Wägezellen zu erfassen sind. In diesem Fall können mehrere erfindungsgemäße Wägesysteme in radialer Richtung benachbart zueinander angeordnet sein, wobei der Drehstern bei jedem Takt jeder der Wägezellen jeweils einen Behälter zuführt bzw. daraus weiter fördert. Die Wägezellen wären in diesem Fall vorteilhafterweise entlang von konzentrischen Bahnen B in radialer Richtung von innen nach außen benachbart oder zusätzlich auch in Umfangsrichtung versetzt zueinander angeordnet.

## Patentansprüche

1. Wägesystem (1) zur Wägung sequentiell zugeführter Wiegegüter, insbesondere Behälter,
a) mit einem eine Vorlast bildenden Wägetisch (2) zur Aufnahme der Gewichtskraft des Wiegeguts,
b) wobei das Wiegegut dem Wägetisch (2) entlang einer über den Wägetisch (2) verlaufenden Bahn (B) zuführbar bzw. vom Wägetisch (2) abführbar ist,
**dadurch gekennzeichnet,**
c) **dass** oberhalb des Wägetisches (2) eine Klemmvorrichtung (3) als Vorlast vorgesehen ist, mit der das Wiegegut, nachdem es dem Wägetisch zugeführt wurde und diesen mit einer Gewichtskraft beaufschlagt, zur vorübergehenden Fixierung lösbar gegen einen Anschlag (4) der Klemmvorrichtung klemmbar ist, um es im geklemmten Zustand wiegen zu können,
d) wobei die Klemmvorrichtung (3) wenigstens ein Klemmelement (5) umfasst, mit welchem das Wiegegut zwischen Klemmelement (5) und Anschlag (4) klemmbar ist.

2. Wägesystem nach Anspruch 1, **dadurch gekennzeichnet, dass** es zur Zu-und/oder Abfuhr des Wiegeguts zum/vom Wägetisch (2) in einzeln, getakteten Schritten ausgebildet ist.

3. Wägesystem nach Anspruch 1 oder 2, **dadurch gekennzeichnet, dass** der Anschlag ortsfest ausgebildet ist

4. Wägesystem nach einem der vorigen Ansprüche, **dadurch gekennzeichnet, dass** die Klemmvorrichtung (3) wenigstens ein Klemmelement (5) umfasst, mit welchem das Wiegegut mit einer quer zur Bahn (B) gerichteten Klemmkraftkomponente beaufschlagbar ist, um es gegen den Anschlag (4) zu klemmen.

5. Wägesystem nach Anspruch 4, **dadurch gekennzeichnet, dass** der Anschlag (4) und/oder ein das Klemmelement (5) führendes Führungsmittel (12) mit dem Wägetisch (2) einstückig ausgebildet ist.

6. Wägesystem nach dem vorhergehenden Anspruch, **dadurch gekennzeichnet, dass** die Bewegungsrichtung des Klemmelements (5) und die Bahn (B) am Ort der Klemmung senkrecht zur Lasteinleitungsrichtung einer mit dem Wägetisch gekoppelten Wägezelle verläuft.

7. Wägesystem nach dem vorhergehenden Anspruch, **dadurch gekennzeichnet, dass** die Bewegungsrichtung des Klemmelements (5), die Bahn (B) und die Lasteinleitungsrichtung der Wägezelle am Ort der Klemmung jeweils senkrecht zueinander verlaufen.

8. Wägesystem nach einem der vorigen Ansprüche, **dadurch gekennzeichnet, dass** das Klemmelement (5) kolbenartig ausgebildet und über ein Betätigungselement (6) bewegbar ist.

9. Wägesystem nach einem der vorigen Ansprüche, **dadurch gekennzeichnet, dass** das Klemmelement (5) über das erste Ende eines als Pleuel, Hebel oder Kniehebel ausgebildeten Betätigungselements (6) bewegbar ist, während ein zweites Ende des Betätigungselements (6) mit einem exzentrischen, von einer Antriebswelle (7) angetriebenen Antriebselement gekoppelt ist.

10. Wägesystem nach einem der vorigen Ansprüche 1 bis 8, **dadurch gekennzeichnet, dass** das Klemmelement (5) über das erste Ende eines als Pleuel, Hebel oder Kniehebel ausgebildeten Betätigungselements (6) bewegbar ist, während ein zweites Ende des Betätigungselements (6) mit einem pneumatischen, elektrischen oder elektromagnetischen Antrieb gekoppelt ist.

11. Wägesystem nach einem der beiden vorigen Ansprüche, **dadurch gekennzeichnet, dass** das Klemmelement (5) über wenigstens ein Federelement (8) mit dem Betätigungselement (6) verbunden ist.

12. Wägesystem nach einem der vorigen Ansprüche, **dadurch gekennzeichnet, dass** ein Sensor, vorzugsweise ein Näherungssensor oder Encoder, zur unmittelbaren oder mittelbaren Lageerfassung des Betätigungselements (6) vorgesehen ist, um die aktuelle Position des Klemmelements zu ermitteln.

13. Wägesystem nach einem der vorigen Ansprüche, **dadurch gekennzeichnet, dass** zur Zuführung des Wiegeguts auf den Wägetisch ein mit einzelnen Taschen versehener, in Taktschritten um vorgebbare Drehwinkel drehbarer Drehstern vorgesehen ist, dessen Taschen jeweils zur Aufnahme eines oder mehrerer Wägegüter ausgebildet sind und sich über den Wägetisch (2) hinwegdrehen.

14. Wägesystem nach dem vorigen Anspruch, **dadurch gekennzeichnet, dass** der Drehstern zur gleichzeitigen Förderung mehrerer, in radialer Richtung benachbarter Behälter ausgebildet ist, die jeweils von separaten Wägezellen zu erfassen sind, wobei die Wägezellen - vorteilhafterweise entlang von konzentrischen Bahnen B - in radialer Richtung benachbart zueinander angeordnet und vorzugsweise auch in Umfangsrichtung versetzt zueinander angeordnet sind.

15. Wägesystem nach dem vorhergehenden Anspruch, **dadurch gekennzeichnet, dass** der Drehstern nach Zuführung des Wiegeguts auf den Wägetisch (2) um einen vorgebbaren Drehwinkel drehbar ist, um das Wiegegut auf dem Wägetisch freizustellen.

## Claims

1. A weighing system (1) for weighing goods to be weighed that are fed sequentially, in particular containers,
a) having a weighing table (2) constituting a preload for receiving the force due to weight of the good to be weighed,
b) wherein the good to be weighed can be fed to the weighing table (2), and discharged from the weighing table (2), along a path (B) extending over the weighing table (2),
**characterised in that**
c) provided above the weighing table (2) as a preload there is a clamping device (3) with which the good to be weighed, after it has been fed to the weighing table and it has applied a force due to weight thereto, for the purposes of temporary fixation can be detachably clamped against a stop (4) of the clamping device in order to be able to weigh it in the clamped state,
d) wherein the clamping device (3) comprises at least one clamping element (5) with which the good to be weighed can be clamped between the clamping element (5) and the stop (4).

2. A weighing system according to claim 1, **characterised in that** it is configured to feed and/or discharge the good to be weighed to/from the weighing table (2) in individual, clocked steps.

3. A weighing system according to claim 1 or 2, **characterised in that** the stop is configured so that it is stationary.

4. A weighing system according to one of the previous claims, **characterised in that** the clamping device (3) comprises at least one clamping element (5) with which a clamping-force component directed transversely to the path (B) can be applied to the good to be weighed in order to clamp it against the stop (4).

5. A weighing system according to claim 4, **characterised in that** the stop (4) and/or a guiding means (12) guiding the clamping element (5) is configured so as to be in one piece with the weighing table (2).

6. A weighing system according to the preceding claim, **characterised in that** the direction of movement of the clamping element (5) and the path (B) at the site of clamping extends perpendicularly to the load-introducing direction of a weighing cell coupled to the weighing table.

7. A weighing system according to the preceding claim, **characterised in that** the direction of movement of the clamping element (5), the path (B) and the load-introducing direction of the weighing cell at the site of clamping in each case extend perpendicularly to each other.

8. A weighing system according to one of the previous claims, **characterised in that** the clamping element (5) is configured in the manner of a plunger and can be moved by way of an actuating element (6).

9. A weighing system according to one of the previous claims, **characterised in that** the clamping element (5) can be moved by way of the first end of an actuating element (6) configured as a connecting rod, lever or toggle lever, whilst a second end of the actuating element (6) is coupled to an eccentric drive element that is driven by a drive shaft (7).

10. A weighing system according to one of the previous claims 1 to 8, **characterised in that** the clamping element (5) can be moved by way of the first end of an actuating element (6) configured as a connecting rod, lever or toggle lever, whilst a second end of the actuating element (6) is coupled to a pneumatic, electric or electromagnetic drive.

11. A weighing system according to one of the two previous claims, **characterised in that** the clamping element (5) is connected to the actuating element (6) by way of at least one spring element (8).

12. A weighing system according to one of the previous claims, **characterised in that** a sensor, preferably a proximity sensor or encoder, is provided for direct or indirect detection of the location of the actuating element (6) in order to ascertain the current position of the clamping element.

13. A weighing system according to one of the previous claims, **characterised in that** provided to feed the good to be weighed onto the weighing table there is a rotary star which is provided with individual pockets and can be rotated in clocked steps about predeterminable angles of rotation and whose pockets are in each case configured to receive one or more goods to be weighed and are rotated across the weighing table (2).

14. A weighing system according to the previous claim, **characterised in that** the rotary star is configured for the simultaneous conveyance of a plurality of containers that are adjacent in the radial direction and are each to be detected by separate weighing cells, wherein the weighing cells are arranged adjacently to each other in the radial direction - advantageously along concentric paths B - and are preferably also arranged so as to be offset in relation to each other in the circumferential direction.

15. A weighing system according to the preceding claim, **characterised in that** after feeding the good to be weighed onto the weighing table (2) the rotary star can be rotated about a predeterminable angle of rotation in order to release the good to be weighed on the weighing table.

## Revendications

1. Système de pesage (1) pour le pesage d'articles à peser amenés de manière séquentielle, plus particulièrement de récipients,
a) avec une table de pesage (2) constituant une pré-charge pour l'absorption du poids de l'article à peser,
b) l'article à peser pouvant être amené sur la table de pesage (2) ou évacué de la table de pesage (2) le long d'une ligne (B) qui traverse la table de pesage (2),
**caractérisé en ce que**
c) au-dessus de la table de pesage (2), se trouve un dispositif de blocage (3) en tant que pré-charge, avec lequel l'article à peser, une fois amené sur la table de pesage et celle-ci soumise à un poids, pour la fixation provisoire, peut être bloqué de manière amovible contre une butée (4) du dispositif de blocage, afin de pouvoir le peser dans l'état bloqué,
d) le dispositif de blocage (3) comprenant au moins un élément de blocage (5) avec lequel l'article à peser peut être bloqué entre l'élément de blocage (5) et la butée (4).

2. Système de pesage selon la revendication 1, **caractérisé en ce qu'**il est conçu pour amener et/ou évacuer l'article à peser vers/de la table de pesage (2) par étapes individuelles cadencées.

3. Système de pesage selon la revendication 1 ou 2, **caractérisé en ce que** la butée est conçue de manière fixe.

4. Système de pesage selon l'une des revendications précédentes, **caractérisé en ce que** le dispositif de blocage (3) comprend au moins un élément de blocage (5), avec lequel l'article à peser peut être soumis à une composante de force de blocage orientée transversalement par rapport à la piste (B), afin de le bloquer contre la butée (4).

5. Système de pesage selon la revendication 4, **caractérisé en ce que** le butée (4) et/ou un moyen de guidage (12) guidant l'élément de blocage (5) est conçu d'une seule pièce avec la table de pesage (2).

6. Système de pesage selon la revendication précédente, **caractérisé en ce que** la direction du mouvement de l'élément de blocage (5) et la piste (B) s'étendent, à l'endroit du blocage, perpendiculairement à la direction de l'introduction de la charge d'une cellule de pesage couplée avec la table de pesage.

7. Système de pesage selon la revendication précédente, **caractérisé en ce que** la direction du mouvement de l'élément de blocage (5), la piste (B) et la direction d'introduction de la charge de la cellule de pesage sont perpendiculaires entre elles à l'endroit du blocage.

8. Système de pesage selon l'une des revendications précédentes, **caractérisé en ce que** l'élément de blocage (5) est conçu sous la forme d'un piston et peut être déplacé par l'intermédiaire d'un élément d'actionnement (6).

9. Système de pesage selon l'une des revendications précédentes, **caractérisé en ce que** l'élément de blocage (5) peut être déplacé par l'intermédiaire de la première extrémité d'un élément d'actionnement (6) conçu comme une bielle, un levier ou un levier à genouillère, tandis qu'une deuxième extrémité de l'élément d'actionnement (6) est couplée avec un élément d'entraînement excentrique, entraîné par un arbre d'entraînement (7).

10. Système de pesage selon l'une des revendications 1 à 8, **caractérisé en ce que** l'élément de blocage (5) peut être déplacé par l'intermédiaire de la première extrémité d'un élément d'actionnement (6) conçu comme une bielle, un levier ou un levier à genouillère, tandis qu'une deuxième extrémité de l'élément d'actionnement (6) est couplée avec un entraînement pneumatique, électrique ou électromagnétique.

11. Système de pesage selon l'une des deux revendications précédentes, **caractérisé en ce que** l'élément de blocage (5) est relié à l'élément d'actionnement (6) par l'intermédiaire d'au moins un élément à ressort (8).

12. Système de pesage selon l'une des revendications précédentes, **caractérisé en ce qu'**un capteur, de préférence un capteur de proximité ou un codeur, est prévu pour la détermination directe ou indirecte de la position de l'élément d'actionnement (6), afin de déterminer la position actuelle de l'élément de blocage.

13. Système de pesage selon l'une des revendications précédentes, **caractérisé en ce que**, pour amener l'article à peser sur la table de pesage, une étoile, munie de différentes poches, rotative par étapes cadencées selon des angles de rotation prédéterminés, est prévue, dont les poches sont conçues pour le logement d'un ou plusieurs articles à peser et tournent en passant au-dessus de la table de pesage (2).

14. Système de pesage selon la revendication précédente, **caractérisé en ce que** l'étoile rotative est conçue pour transporter simultanément des récipients adjacents dans la direction radiale, qui doivent être détectés chacun par des cellules de pesage séparées, les cellules de pesage, de manière avantageuse le long de pistes B concentriques, étant disposées de manière adjacentes entre elles dans la direction radiale et de préférence également décalées entre elles sur la circonférence.

15. Système de pesage selon la revendication précédente, **caractérisé en ce que** l'étoile rotative peut tourner, après l'amenée de l'article à peser sur la table de pesage (2) d'un angle de rotation prédéterminé, afin de libérer l'article à peser sur la table de pesage.
